# EUROPEAN PATENT APPLICATION

(11) **EP 2 455 684 A2**
(43) Date of publication of application: **23.05.2012**
(21) Application number: 11189563.7
(22) Date of filing: 17.11.2011
(51) Int. Cl.: F24J 2/52

(54) **Device for anchoring solar panels on building coverings**

(30) Priority: 19.11.2010 IT TO20100178 U
(71) Applicant: Ruffa, Gian Luca, 13041 Bianzé (Vercelli) (IT); Vaudano, Massimo, 10020 Verrua Savoia (Torino) (IT)
(72) Inventor: Ruffa, Gian Luca, 13041 Bianzé (Vercelli) (IT)
(74) Representative: Frontoni, Stefano

(57) **Abstract**

Described herein is a device for anchoring solar panels to building coverings that have longitudinal ribs in relief, which are substantially parallel and trapezoidal. the device (20) comprises a first bracket (21), a second bracket (22), and a retention member (27) engageable with the structure of a solar panel, where at least one of the two brackets (21, 22) is prearranged for fixing to a covering of a building via mechanical joining members - such as rivets, screws or the like - engaged in through holes of the covering. The brackets (21, 22) each include a first portion (21a; 22a) and a second portion (21b, 22b) set with respect to one another substantially to form a V. The brackets (21, 22) are configured for mutual coupling at the respective first portions (21a, 22a), with the corresponding second portions (21b, 22b) set substantially facing, parallel and divergent with respect to one another, so that the brackets (21, 22) define between one another a substantially trapezoidal seat (S), designed to receive at least one top region of a trapezoidal rib. The brackets (21, 22) can be secured mutually in a plurality of different positions to enable variation of the distance between the second portions (21b, 22b) and hence adapt the width of the trapezoidal seat (S) to the width of a trapezoidal rib.

## Description

### Field of the invention

The present invention relates to a device for anchoring solar panels on building coverings. The invention has been developed with particular reference to a device provided for anchoring locally solar panels to building coverings that have longitudinal ribs in relief, which are substantially trapezoidal and parallel to one another.

### Description of the known art

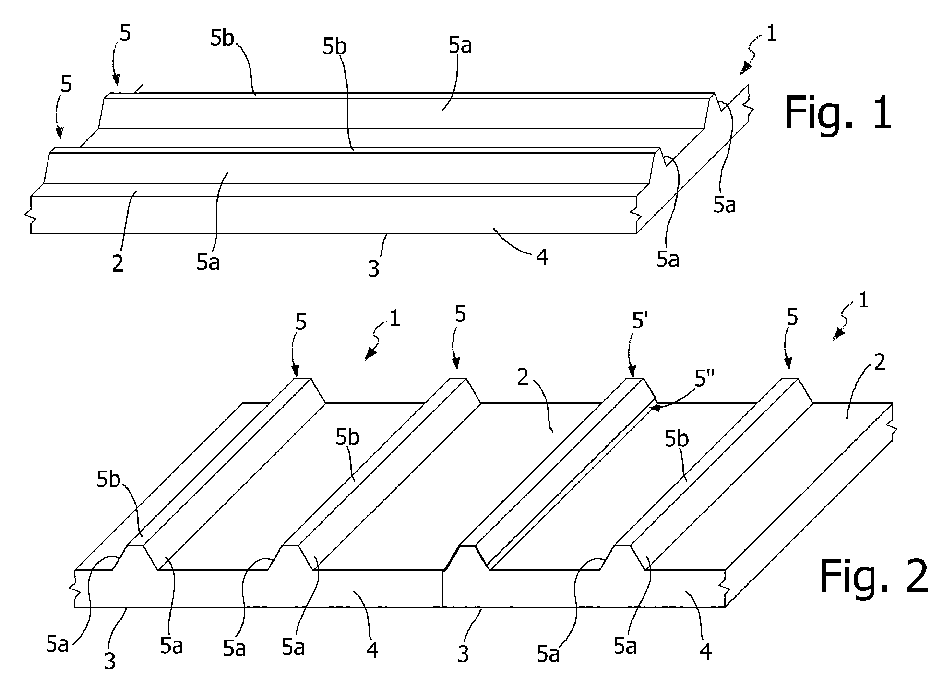

For laying coverings of buildings there has spread the use of substantially modular roofing elements, configured as insulated panels. Figure 1 is a schematic illustration of a portion of a panel of this kind, designated as a whole by 1.

The structure of said panels typically comprises an upper metal sheet 2, a lower sheet 3, which is also usually made of metal, and an insulating material 4, arranged between the two sheets, for example a foamed material. The upper metal sheet 2 is typically corrugated; i.e., it has longitudinal ribs 5 in relief, parallel to one another. These ribs 5 typically have a substantially trapezoidal cross section, i.e., one distinguished by two inclined side faces 5a, which rise from the general plane defined by the sheet 2 and connect up in an upper face 5b, which is generally horizontal. The structure illustrated schematically in Figure 1 is substantially common to the majority of the insulated panels available on the market, even when they come from different manufacturers. The panels produced by different manufacturers can, however, vary from one another in dimensional terms, for example in relation to the sectional dimensions of the ribs 5.

For roofing a building a number of similar panels 1 are mounted alongside one another, secured to a suitable substructure, so that the ribs 5 of the various panels 1 will be parallel to one another, as exemplified schematically in Figure 2. The panels 1 are coupled to one another in a sealed way: usually, for said purpose, provided at one end of a panel is a rib 5' that is not filled, or is filled only partially, by the insulating material 4, in order to enable it to be superimposed to a rib 5" provided at the opposite end of the adjacent panel 1.

In the majority of cases, installation of solar panels on corrugated coverings with trapezoidal ribs presupposes the use of supporting structures, rigidly fixed to the insulated panels, and in particular to the corresponding upper metal sheets. These structures are generally constituted by metal sectional elements, reciprocally tacked to form a framework, which is fixed on the covering and on which the solar panels are secured via suitable retention members. The aforesaid framework is fixed to the corrugated covering directly or with brackets, via mechanical joining members - such as rivets or screws - engaged in through holes formed in the upper metal sheet of the roofing elements.

The aforesaid supporting structures are cumbersome and laborious to tack together, particularly when the number of solar panels to be installed is high, and hence said structures have to be rather extensive. These drawbacks are aggravated by the fact that the aforesaid supporting structures have to be prepared in critical conditions, i.e., on the roof of a building.

For roofing some buildings it is also known to use plate-like roofing elements, not directly provided with insulating means and constituted by simple corrugated metal sheets. These metal sheets have a shape altogether similar to that of the upper metal sheet 2 of the insulated panels represented in Figures 1 and 2. Also in this case, for anchoring solar panels, supporting structures are used of the type described above in regard to the insulated corrugated panels, with the same drawbacks.

### Summary of the invention

The object of the present invention is basically to solve the drawbacks referred to above, and in particular to provide a device for anchoring a solar panel locally to coverings with trapezoidal corrugations, that is simple and inexpensive to produce and easy and fast to install. Another object of the invention is to provide one such device that can be used easily on different corrugated coverings, i.e., ones differing from one another as regards the sectional dimensions of the corresponding longitudinal trapezoidal ribs.

One or more of the aforesaid objects is achieved, according to the present invention, by a device for anchoring solar panels having the characteristics that form the subject of the ensuing claims, which form an integral part of the technical teaching provided herein in relation to the invention.

### Brief description of the drawings

Further purposes, characteristics, and advantages of the invention will emerge clearly from the ensuing description, with reference to the attached drawings, which are provided purely by way of non-limiting example and in which:
- Figure 1 is a partial and schematic perspective view of a generic insulated corrugated roofing element for buildings;
- Figure 2 is a partial and schematic perspective view of two roofing elements that are similar to that of Figure 1, coupled together;
- Figures 3 and 4 are partial and schematic perspective views of a roofing element similar to that of Figure 1, on which two solar panels are anchored via a plurality of devices according to the invention;
- Figures 5 and 6 are schematic perspective views of a first device according to the invention, respectively in an assembled condition and in an exploded view;
- Figures 7 and 8 are schematic perspective views of a second device according to the invention, respectively in assembled condition and in an exploded view;
- Figures 9 and 10 are schematic perspective views of a third device according to the invention, respectively in assembled condition and in an exploded view; and
- Figures 11 and 12 are schematic perspective views of a fourth device according to the invention, respectively in assembled condition and in an exploded view.

### Detailed description of preferred embodiments of the invention

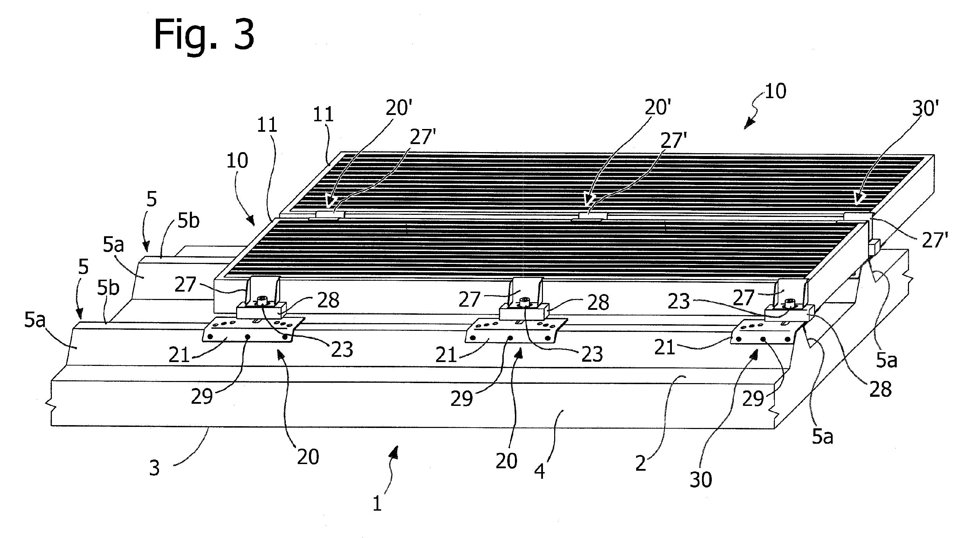

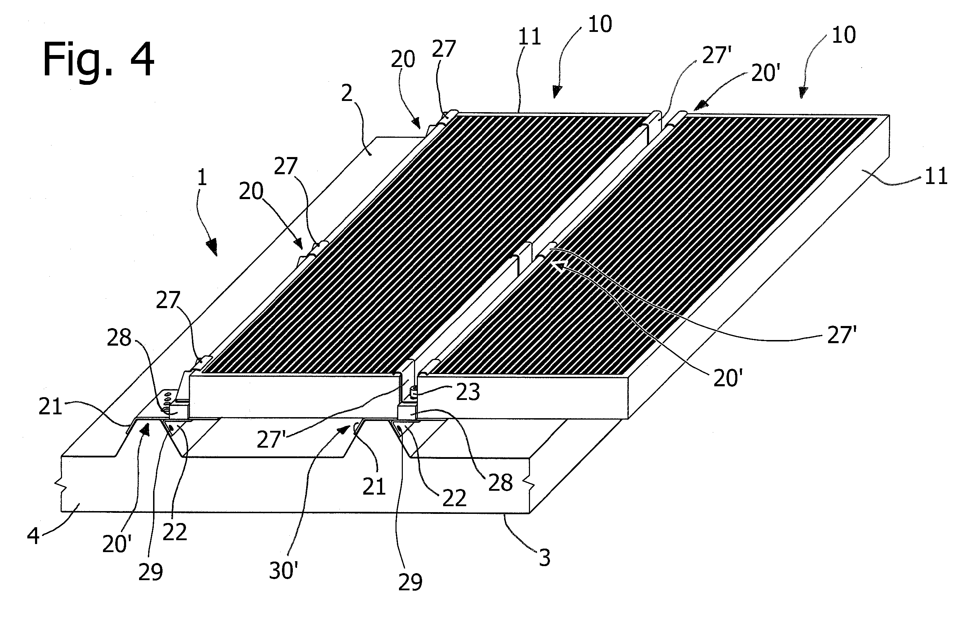

Figures 3 and 4 show by way of example assembly of two solar panels on a corrugated roofing element 1, of the type previously described with reference to Figure 1. In the example, the solar panels, designated by 10, are photovoltaic panels of a type in itself known, having a rigid structure 11 comprising a peripheral frame, made, for example, of aluminium. The invention can in any case be applied also in combination to other types of solar panels having a relatively rigid structure, such as, for example, solar thermal panels.

The two panels 10 are locally anchored to the roofing element 1 by means of a plurality of anchoring devices according to the present invention. With reference to the example presented, anchoring of the panels 10 is obtained using different versions of the device according to the invention, described hereinafter. Said solution is in any case to be understood as merely preferential in so far as the devices used for anchoring the panels 10 could be the same as one another. Moreover, as will emerge clearly hereinafter, the aforesaid different versions of the device according to the invention use for the most part components that are identical to one another.

The anchoring devices according to the invention are designated in Figures 3 and 4 by the references 20, 30 and 20', 30'. The devices 20 and 30 differ from the devices 20' and 30' basically as regards the type of the corresponding members designed for engagement with the structure of the panels 10: in particular, the devices 20 and 30 are conceived for anchoring locally, to a rib 5, a single panel 10, whereas the devices 20' and 30' are conceived for anchoring locally, to one and the same rib 5, two panels 10 set alongside one another. On the other hand, the devices 20 and 20' differ from the devices 30 and 30' substantially as regards the dimensions of their parts designed for fixing to a rib 5: in particular, the devices 20 and 20' can be used for anchoring locally a panel 10 or two panels 10, respectively, in an intermediate area of a rib 5, whereas the devices 30 and 30' can be used for anchoring a panel 10 or two panels 10, respectively, in an end area of a rib 5, without substantially projecting from the overall dimensions of the roofing element 1.

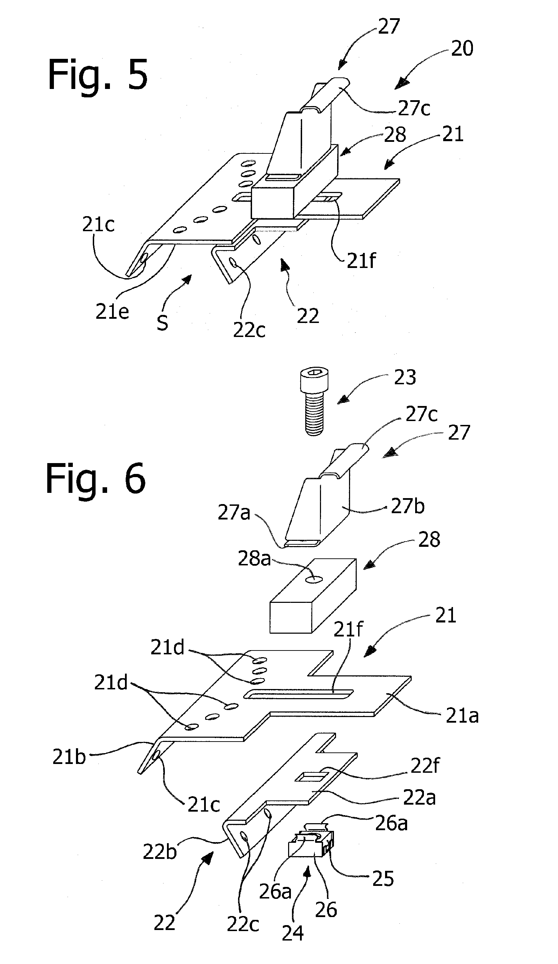

Visible in Figures 5 and 6 is an anchoring device 20, the structure of which comprises a first bracket 21 and a second bracket 22, preferably made of metal material, for example stainless steel. In the example represented, the brackets 21 and 22 are substantially plate-shaped, i.e., they have a generally flattened configuration, and each have an intermediate fold so as to define two respective portions arranged geometrically with respect to one another substantially to form a V, and identified hereinafter for reasons of simplicity also as horizontal portion and inclined portion. In Figure 6 the two portions of the bracket 21 are designated by 21a and 21b, whilst the two portions of the bracket 22 are designated by 22a and 22b.

In the embodiment currently deemed preferential, the smaller angle defined between the two portions 21a-21b of the bracket 21 is an obtuse angle, whereas the smaller angle defined between the two portions 22a-22b of the bracket 21 is an acute angle. It will be appreciated, however, that, with different geometrical configurations of the brackets and of the corresponding means for mutual coupling, the smaller angle defined by the two portions of both of the brackets could be an obtuse angle.

Defined in the inclined portions 21b and 22b, of smaller dimensions, are one or more through holes, designated by 21c and 22c; said holes are used for fixing the brackets 21 and 22, via rivets, screws, or similar mechanical joining members, to the opposite faces 5a of one and the same trapezoidal rib 5 of the roofing element 1. Similar through holes can possibly be provided also in a region (21e) of the horizontal portion 21a, more extensive, of the bracket 21; some of said further holes are designated in Figure 6 by the reference 21d.

The two brackets 21 and 22 are configured for mutual coupling, i.e., they can be paired and secured to one another, at the respective horizontal portions 21a and 22a. In particular, as emerges also from Figure 5, in the assembled condition of the device 20, a first region of the horizontal portion 21a of the bracket 21 is superimposed to at least one first region of the horizontal portion 22a of the bracket 22, whereas the two inclined portions 21b and 22b are set substantially facing and divergent with respect to one another. In this way, as may be noted, the two brackets define between them a substantially trapezoidal seat, designated by S in Figure 5, which is designed to receive a top region of a rib 5 of a roofing element 1.

More in particular, and as may be inferred also from Figures 3 and 4, in the installed condition of the device 20, a second region of the horizontal portion 21a of the bracket 21 - which is not superimposed to the portion 22a of the bracket 22 and is designated by 21e in Figure 5 - rests upon the upper face 5b of a rib 5, whereas the inclined portions 21b and 22b of the brackets are each set up against a respective side face 5b of the rib. From the figures referred to it also emerges how, in the assembled/installed condition of the bracket 20, the superimposed regions of the two brackets 21 and 22 extend substantially in a cantilever fashion with respect to the trapezoidal seat S, i.e., with respect to the rib 5 on which the anchoring device is mounted. Said characteristic enables simplification of the coupling between the solar panels and the anchoring devices, as will emerge hereinafter.

According to a particularly advantageous characteristic, the brackets 21 and 22 can be coupled together, i.e., paired and secured to one another, in a plurality of different positions to enable variation of the distance between the corresponding inclined portions 21b and 22b. In this way, it is possible to adapt the width of the trapezoidal seat S to the width of a rib 5. Said characteristic enables use of the anchoring device 20 - as likewise the devices 20', 30 and 30' - on roofing elements 1 produced by different manufacturers, i.e., even ones distinguished by different dimensions of the section of the longitudinal trapezoidal ribs.

The means that enable the brackets 21 and 22 to be paired and secured to one another are basically of an adjustable type. In the example shown in Figures 5 and 6, these means include at least one slit 21f, preferably substantially eyelet-shaped, defined in the horizontal portion 21a of the bracket 21, and a through opening 22f (which could also be configured as an eyelet), defined in the horizontal portion 22a of the bracket 22. As may be noted, in the example, the slit 21f extends mainly in the region of the portion 21a that is to be superimposed to the portion 22a of the bracket 22, and in part in the region 21e (Figure 5).

The means for coupling between the brackets 21, 22 then comprise threaded coupling members, which include at least one threaded member, such as a screw designated by 23 in Figure 6, inserted so that it passes through the slit 21f of the bracket 21 and the opening 22f of the bracket 22. The screw 23 is designed to be tightened in a corresponding member provided with an internal thread, designated as a whole by 24. In the example, the member 24 is basically constituted by a caged nut, i.e., a nut 25 with a through female thread that is constrained without possibility of rotating within a corresponding cage 26. Preferably, the member 24 is constrained to the portion 22a of the bracket 22 at the through opening 22f. For this purpose, with reference to the preferred example illustrated, the aforesaid cage 26 has top appendages 26a, for engagement without any possibility of rotation relative to the opening 21f, which preferably has a non-circular cross section. A cage 26 without appendages or else simply the nut 24 without the cage could be welded to the bracket 22, or possibly the functions of the member 24 may be obtained by means of a threaded hole of the bracket 22, which replaces the opening 22f.

The device 20 according to the invention further comprises at least one retention member, which is secured to at least one of the brackets 21 and 22 and engageable to the structure of the corresponding solar panel 10. In Figures 5 and 6 the aforesaid retention member is designated as a whole by 27 and comprises a base 27a, provided with a fixing hole (not visible), an upright part 27b, which rises substantially orthogonal from the base 27a, and a terminal part 27c, substantially jutting out of the upright part 27b, which provides a tooth for engagement to the structure of a corresponding panel 10.

The device 20 is then provided with fixing means for constraining the retention member 27 to at least one of the brackets 21 and 22. Advantageously, in the preferred embodiment illustrated, the aforesaid fixing means comprise the means used for pairing and securing the brackets 21 and 22 to one another. Hence, in this way, the bracket 21, the bracket 22, and the retention member 27 are constrained together in the regions where the two brackets overlap.

The fixing means of the retention member 27 preferably also comprise at least one spacer element, operatively arranged between the retention member 27 and the horizontal portion 21a of the bracket 21. The spacer element, designated by 28, is purposely provided with a through hole 28a for the screw 23.

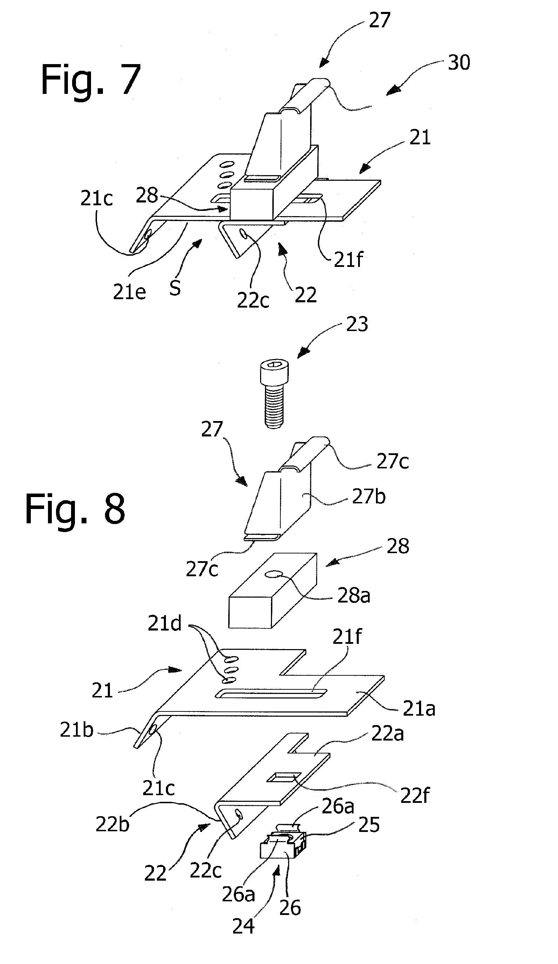

Figures 7 and 8 illustrate an anchoring device 30. In these figures, the same reference numbers are used as in the previous figures to designate elements that are technically equivalent to those already described above.

As may be appreciated from a comparison between Figures 5-6 and Figures 7-8, the devices 20 and 30 differ from one another substantially for the conformation of the brackets 21 and 22, which in the case of the device 30 have a longitudinal development (in the direction of the length of the ribs) that is smaller than that of the device 20. The remaining components and the corresponding modalities of use are the same as those described previously with reference to the devices 20.

As mentioned previously, the devices 20 can be used for anchoring the panels 10 in regions of the ribs 5 that are intermediate with respect to the respective ends, as may be clearly seen for example in Figure 3. On the other hand, the devices 30 can be used for anchoring the panels in end regions of the ribs 5, as may be clearly seen for example in Figures 3 and 4.

The fact that the brackets 21 and 22 of the devices 30 have a longitudinal development that is smaller is basically aimed at preventing the brackets themselves from projecting beyond the overall dimensions of the roofing element 1, as may be clearly seen for example in Figures 3 and 4. It should be noted that in these figures the spacer element 28 of the bracket 30 (as likewise that of the bracket designated by 30') projects slightly beyond the overall dimensions of the panels 10 and of the roofing element 1: it will be appreciated, however, that also the spacer elements 28 can be sized so as to remain within the aforesaid overall dimensions. As may be noted, in any case, fixing of the brackets 21 of the devices 20 and 30 to the ribs 5 (as likewise fixing of the corresponding brackets 22) can be performed using the same number of joining members, such as the rivets designated by 29 in Figure 3, which pass through holes made in the upper metal sheet 2 of the roofing element 1.

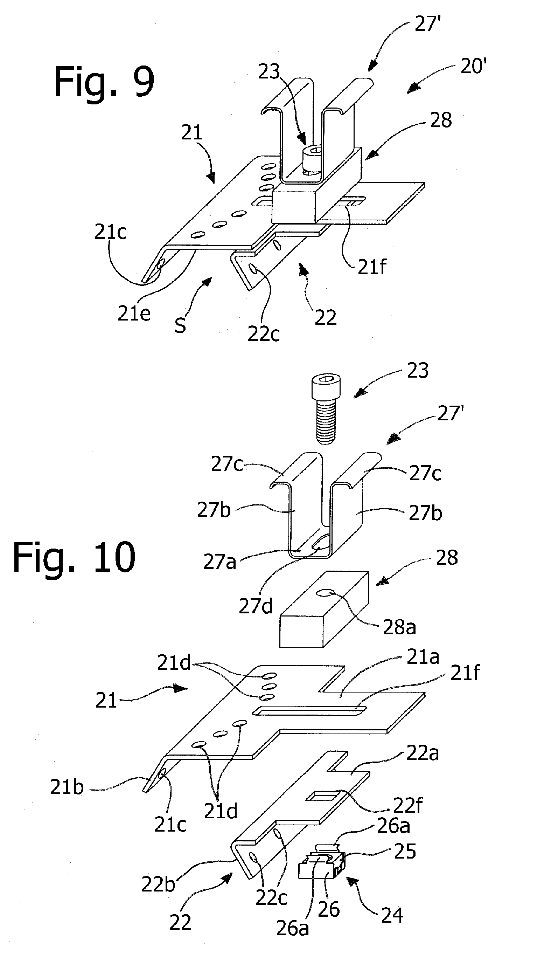

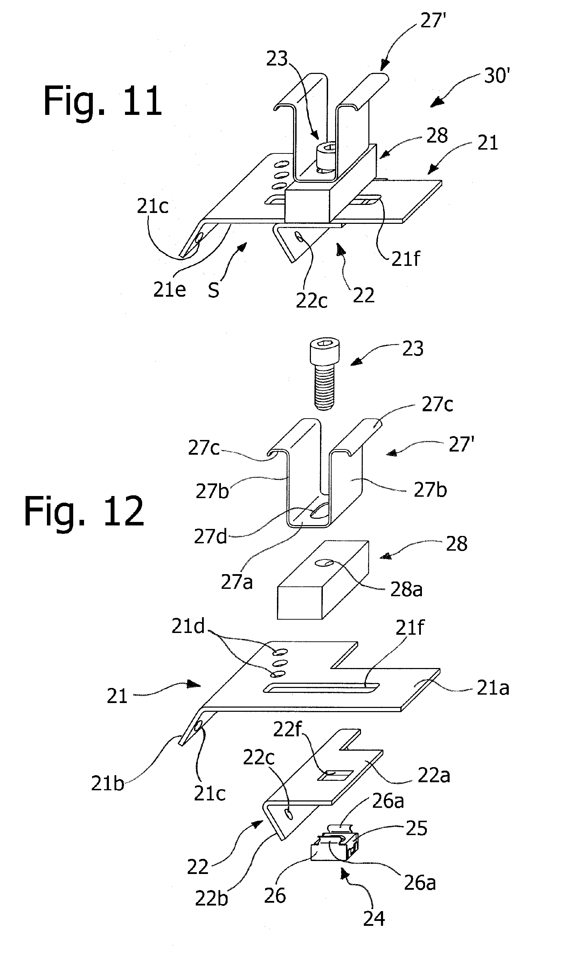

Figures 9-10, on the one hand, and Figures 11-12, on the other, illustrate the devices 20' and 30'. Also these figures use the same reference numbers as the previous figures to designate elements that are technically equivalent to the ones described above.

As may be noted, the structure of the devices 20' and 30' is for the most part identical to that of the devices 20 and 30, respectively, the only difference regarding the conformation of the corresponding retention members, here designated by 27'. In this case, the members 27' are substantially shaped like an omega turned upside down, i.e., rising from the two ends of the corresponding base 27a are two upright parts 27b, which are substantially parallel to one another and each of which has the respective terminal part 27c jutting out. Moreover visible in Figures 10 and 12 is the hole - designated by 27d - present in the base 27a of the member 27', for passage of the screw 23. As has been said, a similar hole is present also in the base 27a base of the retention members 27 of Figures 5-8.

With this configuration of the members 27', and as is clearly visible in Figures 3 and 4, it is possible to use one and the same device 20' or 30' for anchoring two panels 10 locally to one and the same trapezoidal rib 5, with the member 27' and the corresponding spacer 28 that extend between the two panels 10.

As may be readily understood, for a fixing of the above sort it is particularly advantageous for the overlapping regions of the two brackets 21 and 22 to extend substantially in a cantilever fashion with respect to the trapezoidal seat S in order to enable an easy access to the screw 23 used for pack tightening, together with the caged nut 24, the ensemble constituted by the two brackets 21, 22, by the spacer element 28, and by the retention member 27'.

Installation of the anchoring devices according to the invention is very simple and fast.

In a pre-assembled configuration of the type shown in Figures 5, 7, 9 or 11, with the screw 23 not tightened, the bracket 21 is set up against the desired point of the rib 5 so that the region 21e (Figure 5) of the portion 21a and the portion 21b rest, respectively, on the surfaces of the upper face 5b and of one of the inclined faces 5a of the rib 5. The bracket 21 is then fixed to the rib 5 using the holes 21c (Figures 5-6). Fixing can be made preferably with rivets, such as those designated by 29 in Figure 3, that pass through holes of the metal sheet 2, provided during the riveting operation. Thanks to the slack coupling with the bracket 21, the bracket 22 is then positioned so that the corresponding portion 22b is set up against the other inclined face 5a of the rib and fixed there via rivets, some of which are designated by 29 in Figure 4 using the holes 22c (Figures 5-6). The screw 23 can then being tightened home in the caged nut 24 carried by the bracket 22 so that the retention member 27 or 27' will secure locally the panel 10 or panels 10 set alongside the brackets 21, 22. These operations are carried out for the various anchoring devices used.

Of course, the thickness in depth of the spacer elements 28 can be chosen according to the thickness of the structure 11 of the panels 10 to be installed. Obviously, there is nothing to rule out providing a number of spacer elements 28, that are possibly to be set on top of one another if so required, according to the thickness of the panels 10.

The dimensions of the brackets 21, 22, and in particular their width, will be chosen to render them usable on trapezoidal ribs 5 of various dimensions. Considering, for example, that existing on the market are roofing elements 1 produced by different manufacturers, in which the upper face 5b has a width ranging between 20 mm and 50 mm, at least the width of the portions 21a and 22a, as well as the position and length of the slit 21f, will be chosen accordingly to enable adaptation of the width of the seat S, i.e., of the region 21e (Figure 5), to said different ribs.

In general terms, moreover, the sides 5a of the ribs 5 of roofing elements 1 of various manufacturers have an inclination comprised between 30° and the 40° with respect to the vertical. For this reason, the angle of the inclined portions 21b and 22b of the brackets, with respect to a plane orthogonal to the horizontal portions 21a and 22a, respectively, will preferably have an intermediate value between 30° and 40°, for example close to 35°, this in view of the fact that, in the course of the operations of fixing of the brackets 21 and 22 to the ribbing 5 and of pack tightening via the threaded means 23-24, there is in any case allowed a certain flexure between the portions 21a, 22a with respect to the portions 21b, 22b of the brackets.

From the foregoing description, the characteristics and the advantages afforded by the present invention emerge clearly and are mainly represented by the simplicity and economy of production of the anchoring devices described, as well as the ease and speed of installation of the devices themselves and of the solar panels. A substantial advantage of the invention is also represented by the possibility of adapting the anchoring device to various possible sectional dimensions of trapezial ribs.

In the embodiments exemplified in the figures, the panels 10 are rectangular and mounted with their major sides parallel to the ribs 5. It will, however, be appreciated that it is also possible to fix the panels 10 with the major sides substantially orthogonal, or in any case in a transverse direction, with respect to the ribs 5. In fact, the configuration described of the anchoring devices according to the invention enables securing of the retention members 27 or 27' in a number of different angular positions, with respect to an axis of rotation identified by the screw 23.

Described by way of example in the foregoing is installation of solar panels on insulated roofing elements, but it will be appreciated that the anchoring devices according to the invention can be used also on roofing elements with trapezoidal corrugations of other type, such as simple corrugated metal sheets with trapezoidal ribs without insulating material.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A device for anchoring solar panels to building coverings (1) that have longitudinal ribs in relief (5) which are substantially parallel and trapezoidal, the anchoring device (20; 20'; 30; 30') comprising at least one first bracket (21), a second bracket (22), and a retention member (27; 27') that can be engaged with the structure (11) of one said panel (10), at least one of the first and second brackets (21, 22) being prearranged for fixing to the building covering (1) via mechanical joining members (29) - such as rivets, screws, or the like - engaged in through holes of the roof itself, wherein:
- the first and second brackets (21, 22) each include a first portion (21a, 22a) and a second portion (21b, 22b) set with respect to one another substantially to form a V;
- the first and second brackets (21, 22) are configured for mutual coupling at the respective first portions (21a, 22a), with the corresponding second portions (21b, 22b) set substantially facing and divergent with respect to one another, so that the first and second brackets (21, 22) define between one another a substantially trapezoidal seat (S), designed to receive at least one top region of one said trapezoidal rib (5); and
- the first and second brackets (21, 22) are couplable together in a plurality of different positions to enable variation of the distance between said second portions (21b, 22b) and hence adapt the width of said trapezoidal seat (S) to the width of one said trapezoidal rib (5).

2. The device according to Claim 1, wherein the brackets (21, 22) are configured so that, in an installed condition of the device (20; 20'; 30, 30'), the first portion (21a) of at least one of the first and second brackets (21, 22) rests at least partially (21e) upon an upper surface (5b) of said trapezoidal rib (5) and the second portions (5a) of the first and second brackets (21, 22) are each set up against an inclined lateral surface (5a) of said trapezoidal rib (5).

3. The device according to Claim 1 or Claim 2, wherein the first and second portions (21a, 21b) of at least one of the first and second brackets (21, 22) define an obtuse angle with respect to one another, where in particular the first and second portions (21a, 21b) of the first bracket (21) define an obtuse angle with respect to one another, and the first and second portions (22a, 22b) of the second bracket (22) define an acute angle with respect to one another.

4. The device according to Claim 2, wherein at least the second portions (21b, 22b) of the first and second brackets (21, 22) comprise one or more through openings (21c, 22c) for said mechanical joining members (29).

5. The device according to any one of the preceding claims, comprising coupling means (21f, 22f, 23, 24) for pairing and securing to one another the first and second brackets (21, 22) in a plurality of possible relative positions.

6. The device according to Claim 5, wherein the coupling means (21f, 22f, 23, 24) include at least one slit (21f), preferably substantially eyelet-shaped, defined in the first portion (21a) of one of the first and second brackets (21a, 22), and a through opening (22f), defined in the first portion (22a) of the other one of the first and second brackets (21, 22).

7. The device according to Claim 6, wherein the coupling means (21f, 22f, 23, 24) comprise threaded coupling members (23, 24), which include at least one of a threaded member (23), such as a screw, passing through said slit (21f) and said opening (22f), and a member with a female thread (25), such as a nut, constrained to the first portion (21a, 22a) of one said bracket (21, 22) at one of said slit (21f) and said opening (22f).

8. The device according to any one of the preceding claims, comprising fixing means (21f, 22f, 23, 24, 28) for constraining said retention member (27; 27') to at least one of the first and second brackets (21, 22), where in particular the retention member (27; 27') can be secured in a fixed position with respect to at least one of the first and second brackets (21, 22) in at least two different angular positions with respect to the axis of a corresponding threaded fixing member (23).

9. The device according to Claims 5 and 8, wherein said fixing means (21f, 22f, 23, 24, 28) comprise said coupling means (21f, 22f, 23, 24).

10. The device according to Claim 9, wherein said fixing means (21f, 22f, 23, 24, 28) comprise at least one spacer element (28), set between the retention member (27; 27') and the first portion (21a, 22a) of one of the first and second brackets (21, 22), the spacer member (28) having in particular a through hole (28a) for a threaded fixing member (23).

11. The device according to any one of the preceding claims, wherein the retention member (27; 27') has a base (27a) provided with a hole (27d) for fixing with respect to at least one of the first and second brackets (21, 22), at least one upright part (27b), which rises substantially orthogonal from the base (27a), and a terminal part (27c) configured for engagement to one said panel (10), the terminal part (27c) in particular substantially jutting out from the upright part (27b).

12. The device according to Claim 11, wherein the retention member (27') has at least two said upright parts (27b), which rise substantially parallel from the base (27a), each upright part (27b) having a respective said terminal part (27c), the retention member (27') being designed for engagement with two said panels (10) set alongside one another.

13. The device according to any one of the preceding claims, wherein the first and second brackets (21, 22) are shaped substantially like a plate, i.e., they have a generally flattened configuration.

14. The device according to any one of the preceding claims, wherein a first region of the first portion (21a) of the first bracket (21) overlaps a first region of the first portion (22a) of the second bracket (22), and a second region (21e) of the first portion (21a) of the first bracket (21) is designed to rest upon an upper surface (5b) of one said trapezoidal rib (5).

15. The device according to Claim 14, wherein said first regions extend substantially in cantilever fashion with respect to said trapezoidal seat (S), i.e., with respect to one said trapezoidal rib (5), the first bracket (21), the second bracket (22) and the retention member (27) being constrained to one another at said first regions.
